# EUROPEAN PATENT APPLICATION

(11) **EP 4 654 403 A1**
(43) Date of publication of application: **26.11.2025**
(21) Application number: 25164627.9
(22) Date of filing: 19.03.2025
(51) Int. Cl.: H02G 1/12, B23K 26/082, B23K 26/08, B23K 26/402

(54) **COATING REMOVING METHOD AND COATING REMOVING DEVICE**

(30) Priority: 20.05.2024 JP 2024081997
(71) Applicant: Kataoka Corporation, Kyoto-shi, Kyoto 601-8203 (JP)
(72) Inventor: MIYAKE, Masaki, Kyoto 601-8203 (JP); MIYAI, Ryuichi, Kyoto 601-8203 (JP); ENDO, Osamu, Kyoto 601-8203 (JP)
(74) Representative: Seemann & Partner Patentanwälte mbB

(57) **Abstract**

A coating removing method for removing a coating of a wire by laser beam while moving the wire in a feeding direction relative to a laser irradiation device. In the coating removing method for removing the coating of the wire, a spot region of the laser beam is moved along the feeding direction.

## Description

### TECHNICAL FIELD

The present disclosure relates to a coating removing method and a coating removing device.

### BACKGROUND ART

A coating removing method described in JP2021-158819A discloses a method of irradiating an insulation coating of an electric wire with laser beam to remove the insulation coating.

As a method for removing an insulation coating of an electric wire, a method of emitting laser beam as described in JP2021-158819A is known.

In a case where the insulation coating is removed while turning and moving a spot region of the laser beam between one end portion and the other end portion in a width direction of a wire, unevenness may occur in a removing state of the wire between an end portion in the width direction and a central portion in the width direction of the wire.

The following factors are considered as factors causing unevenness in the removing state of the wire. That is, in a case where the coating is removed while turning and moving the spot region of the laser beam between an end portion and the other end portion in the width direction of the wire, a movement speed of the spot region of the laser beam is decelerated before and after a turn-around point of the spot region in the vicinity of the end portion in the width direction of the wire. In such a case, depending on the degree of deceleration, a large difference may occur between irradiation time of the laser beam per unit area at the central portion in the width direction of the wire and irradiation time of the laser beam per unit area in the vicinity of the end portion in the width direction of the wire, and a failure may occur in which the wire is burned by being irradiated with laser beam more than necessary in the vicinity of the end portion in the width direction of the wire.

### SUMMARY OF INVENTION

Aspect of non-limiting embodiments of the present disclosure relates to provide a coating removing method and a coating removing device capable of uniformly removing a coating of a wire between an end portion in a width direction and a central portion in the width direction of the wire.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a coating removing method for removing a coating of a wire by laser beam while moving the wire in a feeding direction relative to a laser irradiation device,
in which a spot region of the laser beam is moved along the feeding direction.

According to an aspect of the present disclosure, there is provided a coating removing device for removing a coating of a wire by laser beam while moving the wire in a feeding direction with respect to a laser irradiation device,
in which the laser irradiation device includes:
   a laser beam source unit configured to output the laser beam;
   a scanning unit configured to scan a spot region of the laser beam with respect to the wire; and
   a controller configured to control the scanning unit, and
the controller is configured to control the scanning unit to move the spot region along the feeding direction of the wire.

### BRIEF DESCRIPTION OF DRAWINGS

Exemplary embodiment(s) of the present invention will be described in detail based on the following figures, wherein:
FIG. 1 is a schematic view of a coating removing device that executes a coating removing method according to the present embodiment.
FIG. 2 is a block diagram of a laser irradiation device according to the present disclosure.
FIG. 3 is a schematic view of a galvanometer optical system according to an embodiment.
FIG. 4 illustrates a state of the wire (upper part) and a trajectory of a spot region (lower part) immediately after a first irradiation step is started.
FIG. 5 illustrates a state on the wire (upper part) and a trajectory of the spot region (lower part) at a time point when the first irradiation step is ended.
FIG. 6 is a diagram illustrating a process of coating removing of the wire by the coating removing device according to the embodiment.
FIG. 7 illustrates a state of the wire (upper part) and a trajectory of the spot region (lower part) immediately after a second irradiation step is started.
FIG. 8 illustrates a state on the wire (upper part) and a trajectory of the spot region (lower part) at a time point when the second irradiation step is ended.
FIG. 9 is a diagram illustrating a process of the coating removing of the wire by the coating removing device according to the embodiment.
FIG. 10 is a diagram illustrating a coating removing step after end of a first phase and before start of a second phase.
FIG. 11 is a diagram illustrating the process of coating removing of the wire by the coating removing device according to the embodiment.
FIG. 12 is a diagram illustrating a process of the coating removing of the wire by the coating removing device according to the embodiment.
FIG. 13 is a diagram illustrating an irradiation trajectory of laser beam from start of the first phase to end of the second phase.

### DESCRIPTION OF EMBODIMENTS

Hereinafter, embodiments of the present disclosure will be described with reference to the drawings. Dimensions of members illustrated in the drawings may be different from actual dimensions of the members for convenience of description.

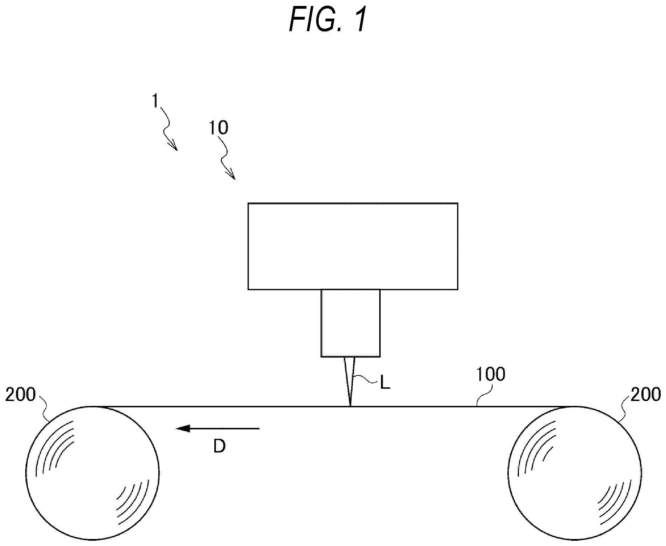

FIG. 1 is a schematic view of a coating removing device configured to perform a coating removing method according to the present embodiment. As illustrated in FIG. 1, a coating removing device 1 includes a laser irradiation device 10 and a conveyance device 200. The conveyance device 200 includes a pair of rollers. A wire 100 having an insulation coating is wound around the pair of rollers. In the present embodiment, the wire 100 is a coated wire including a center conductor and an insulation coating. The conveyance device 200 may be configured to feed the wire 100 from one roller to the other roller along a feeding direction D.

The laser irradiation device 10 is configured to irradiate the wire 100 with laser beam L to remove the insulation coating of the wire 100. The laser irradiation device 10 is configured to scan the laser beam L along the feeding direction of the wire 100.

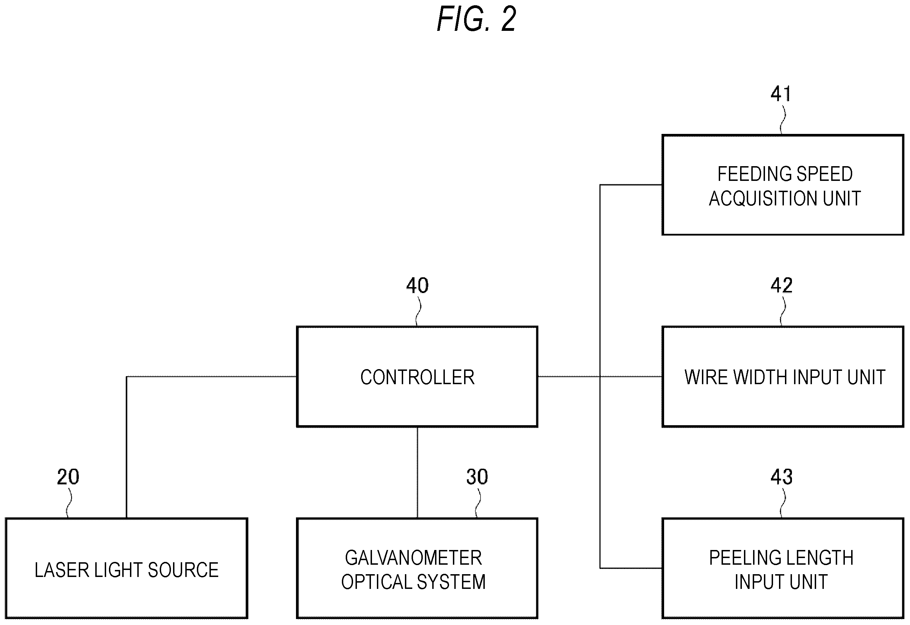

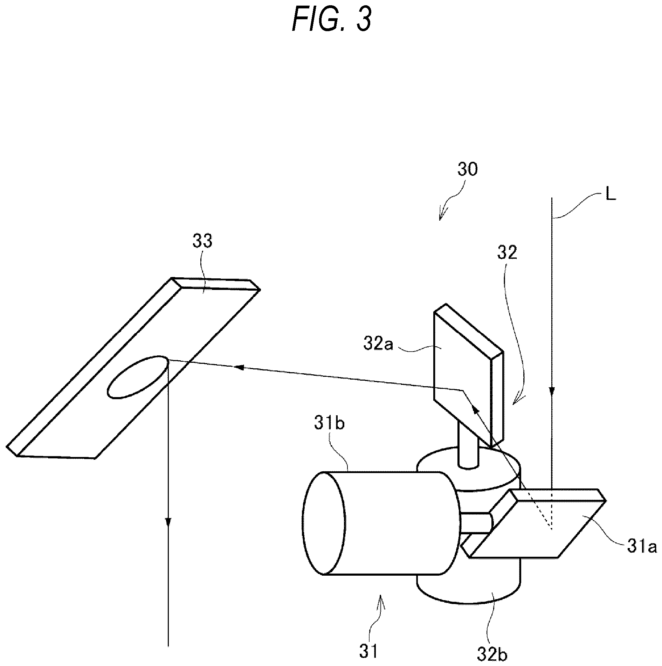

Next, the laser irradiation device 10 according to the present disclosure will be described in detail with reference to FIGS. 2 and 3. FIG. 2 is a block diagram of the laser irradiation device 10 according to the present disclosure. FIG. 3 is a schematic view of a galvanometer optical system 30 according to an embodiment. As illustrated in FIG. 2, the laser irradiation device 10 includes a laser beam source 20, the galvanometer optical system 30, a controller 40, a feeding speed acquisition unit 41, a wire width input unit 42, and a removing length input unit 43.

The laser beam source 20 is an oscillator configured to emit the laser beam L (see FIG. 1). In the present embodiment, the laser beam source 20 may be configured to emit laser beam having a wavelength of, for example, 400 nm to 470 nm.

For example, the laser beam source 20 configured to emit the laser beam L having a wavelength from 354 nm, which is a wavelength of a UV laser, to 1,064 nm, which is a wavelength of an IR laser, may be used depending on a material of a removing target.

The galvanometer optical system 30 is configured to displace the laser beam L emitted from the laser beam source 20 in any two-dimensional direction. As illustrated in FIG. 3, the galvanometer optical system 30 includes an X-axis galvanometer scanner 31, a Y-axis galvanometer scanner 32, and a mirror 33.

The X-axis galvanometer scanner 31 includes an X-axis galvanometer mirror 31a and an X-axis galvanometer motor 31b. The X-axis galvanometer mirror 31a is fixed to an output shaft of the X-axis galvanometer motor 31b. By driving the X-axis galvanometer motor 31b, an orientation of the X-axis galvanometer mirror 31a is changed.

The Y-axis galvanometer scanner 32 includes a Y-axis galvanometer mirror 32a and a Y-axis galvanometer motor 32b. The Y-axis galvanometer mirror 32a is fixed to an output shaft of the Y-axis galvanometer motor 32b. By driving the Y-axis galvanometer motor 32b, an orientation of the Y-axis galvanometer mirror 32a is changed.

The laser beam L emitted from the laser beam source 20 is reflected by the X-axis galvanometer mirror 31a and the Y-axis galvanometer mirror 32a, and then guided to the wire 100 by the mirror 33.

The controller 40 is configured to control the laser beam source 20 and the galvanometer optical system 30. More specifically, the controller 40 is configured to control on and off of emission of the laser beam L emitted from the laser beam source 20. The controller 40 is configured to control the X-axis galvanometer motor 31b and the Y-axis galvanometer motor 32b to change angles of the X-axis galvanometer mirror 31a and the Y-axis galvanometer mirror 32a, thereby changing an irradiation position of the laser beam L and a movement speed of the irradiation position.

The feeding speed acquisition unit 41 is configured to acquire a feeding speed of the wire 100. The feeding speed acquisition unit 41 may be configured to acquire an output of a feeding speed sensor (not illustrated) configured to detect the feeding speed of the wire 100 or may be configured to acquire a rotational speed of the roller. Alternatively, the feeding speed acquisition unit 41 may be configured to acquire the feeding speed input by an operator.

The operator may freely input, to the wire width input unit 42, a length in the width direction of the wire 100 on which the laser beam L is emitted. Alternatively, the wire width input unit 42 may be configured to acquire the length of the wire 100 in the width direction, from a sensor configured to detect the length of the wire 100 in the width direction.

The operator may freely input, to the removing length input unit 43, a removing length of the coating of the wire 100. The wire width input unit 42 and the removing length input unit 43 may be configured to acquire a signal output from an input device such as a keyboard or a touch panel operated by the operator.

The feeding speed acquisition unit 41, the wire width input unit 42, and the removing length input unit 43 are connected to the controller 40. The controller 40 is configured to control the laser beam source 20 and the galvanometer optical system 30, based on information acquired from the feeding speed acquisition unit 41, the wire width input unit 42, and the removing length input unit 43.

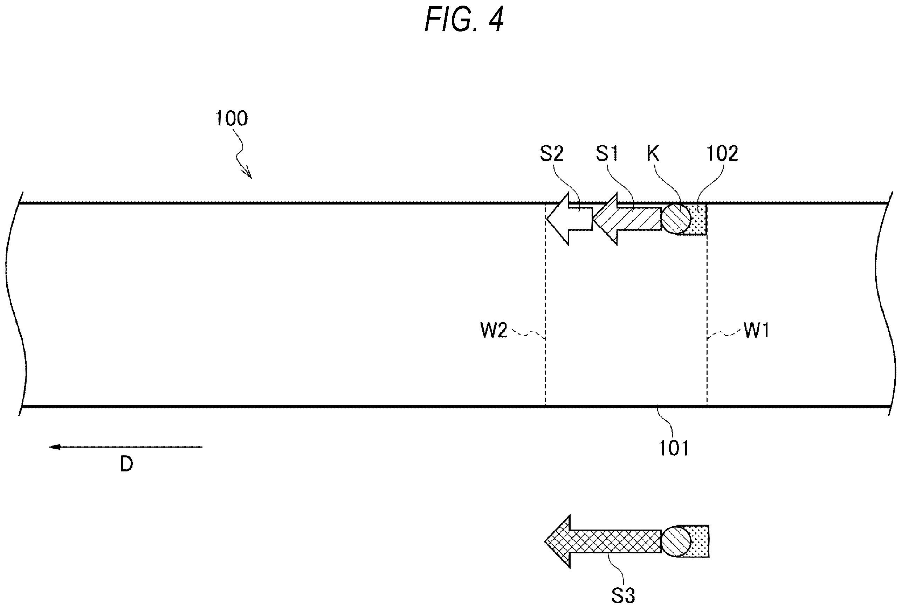

Next, the coating removing method of the coating removing device 1 according to the present embodiment will be described in detail with reference to FIGS. 4 to 12. FIGS. 4 to 12 are diagrams illustrating a process of coating removing of the wire 100 by the coating removing device 1 according to the embodiment.

FIGS. 4 to 12 illustrate a process of removing the coating of the wire 100. In FIGS. 4 to 12, a coated region 101 in which the coating is not removed and a removed region 102 in which the coating is removed are illustrated separately. In each drawing, the removed region 102 is hatched.

In the coating removing method according to the present embodiment, the laser irradiation device 10 irradiates the coated region 101 with the laser beam L to remove the coating and expose a conductor portion of the wire 100, thereby forming the removed region 102.

FIGS. 4 to 12 illustrate, in an upper part of a paper surface, a state where the coating is removed on the wire 100. In a lower part of the paper surface, an irradiation trajectory of the laser beam L viewed from the laser irradiation device 10 is illustrated. A mode of irradiation of the wire 100 with the laser beam L illustrated in the upper part corresponds to the irradiation trajectory of the laser beam by the laser irradiation device 10 illustrated in the lower part. More specifically, the upper parts of FIGS. 4 to 12 illustrate, in time series, how the laser beam emitted from the laser irradiation device 100 is emitted to the wire 100 moving in the feeding direction D in order to remove the coating of the wire 100. On the other hand, the lower parts of FIGS. 4 to 12 illustrate, in time series, the irradiation trajectory of the laser beam emitted from the laser irradiation device 100 when the irradiation state of the laser beam on the wire 100 illustrated in the upper parts is implemented.

In the present embodiment, the coating of the coated region 101 in a range partitioned by a start line W1 and an end line W2 on the wire 100 is removed by the laser beam L.

The coating removing device 1 according to the present embodiment may be configured to perform a first irradiation step, a width feeding step, and a second irradiation step, and the coating of the wire 100 is removed by repeating these steps. The coating removing device 1 is configured to perform the first irradiation step again, after performing the second irradiation step. The laser irradiation device 10 is configured to irradiate the wire 100 with the laser beam L in a range of a spot region K from start of the first irradiation step to end of the second irradiation step. In the first irradiation step and the second irradiation step, the laser irradiation device 10 moves the spot region K at a constant speed S1 with respect to the wire 100.

### [First Irradiation Step]

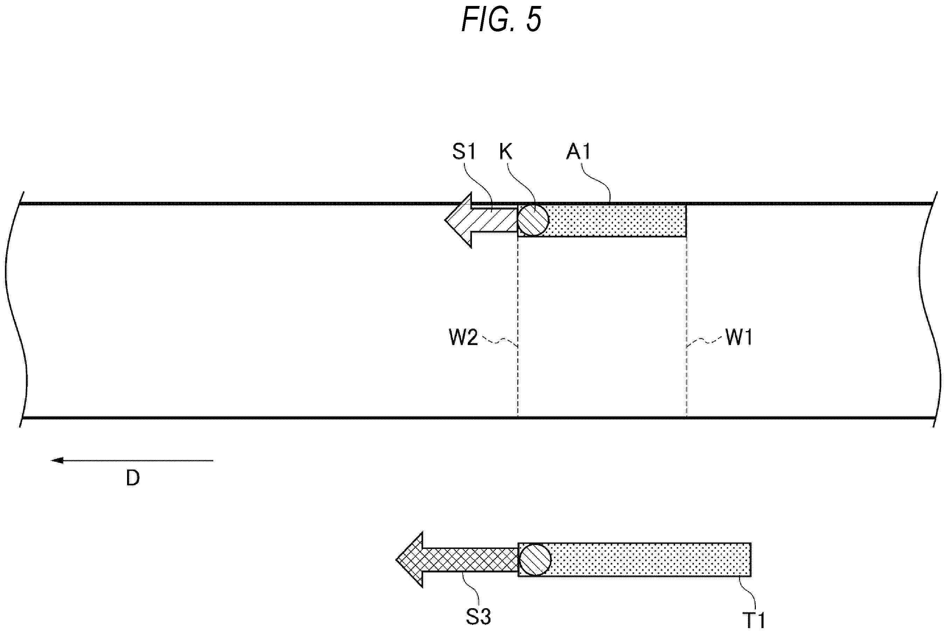

The first irradiation step according to the present embodiment will be described with reference to FIGS. 4 and 5. FIG. 4 illustrates a state of the wire 100 (upper part) and a trajectory of the spot region K (lower part) immediately after the first irradiation step is started. In the first irradiation step, the laser irradiation device 10 irradiates a first irradiation region A1 of the wire 100 with the laser beam L while moving the spot region K along the feeding direction D of the wire 100. The first irradiation region A1 is a region, on the surface of the wire 100, having the same diameter as the spot region K in the width direction of the wire 100 and having a removing length in the feeding direction.

A movement speed of the spot region K with respect to the wire 100 in the first irradiation step is S1. The laser irradiation device 10 is configured to adjust a relative speed of the spot region K with respect to the wire 100 to S1, by moving the spot region K at a speed S3 with respect to the wire 100 fed at a speed S2. The movement speed S1 is a relative movement speed of the spot region K with respect to the wire 100 fed at the feeding speed S2. When the feeding direction D of the wire 100 is positive, the speeds S1 to S3 satisfy a relational expression of S1 = S3 - S2.

FIG. 5 illustrates a state on the wire 100 (upper part) and a trajectory of the spot region K (lower part) at a time point when the first irradiation step is ended. As illustrated in the upper part, the laser irradiation device 10 ends the removing of the coating of the first irradiation region A1 at a time point when the first irradiation step is ended. As illustrated in the lower part of FIG. 5, a length of a trajectory T1 along which the laser irradiation device 10 actually moves the spot region K is longer than that of the first irradiation region A1. This is because a first scanning speed S3 at which the laser irradiation device 10 moves the spot region K is faster than the speed S1 at which the spot region K moves on the wire 100 (S3 > S1) even when the irradiation time of the laser beam L is the same.

### [Width Feeding Step]

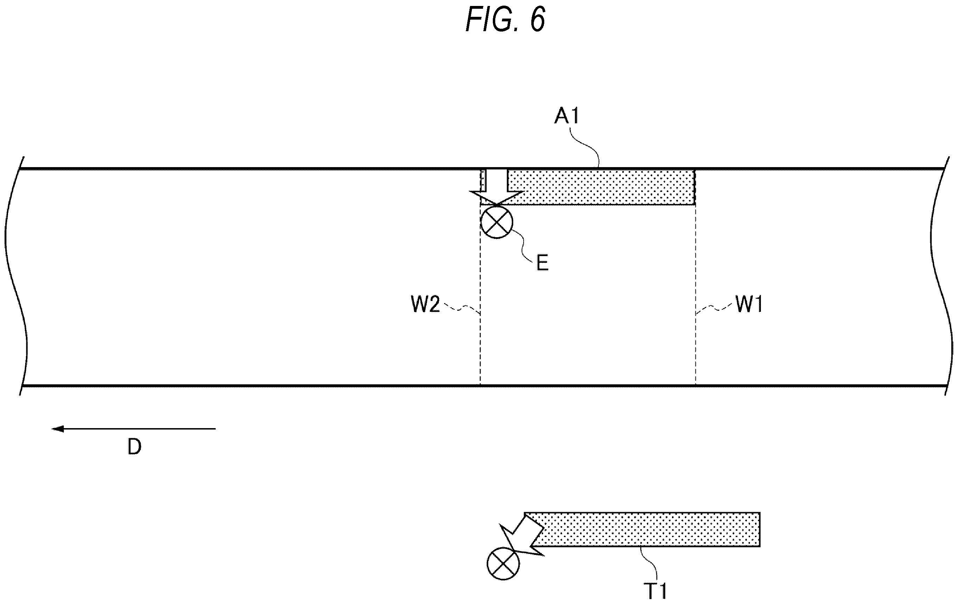

Next, the width feeding step will be described with reference to FIG. 6. FIG. 6 illustrates a state of the wire 100 (upper part) and a trajectory of the spot region K (lower part) during the width feeding step. In the width feeding step, the laser irradiation device 10 moves the irradiation position of the laser beam L in a state where the emission of the laser beam L is stopped. In the following description, a pseudo spot region K in a state where the laser beam L is not emitted is represented as a planned irradiation position E.

In the width feeding step, the planned irradiation position E is moved on the wire 100 (see upper part of FIG. 6) so as to traverse perpendicularly to the feeding direction. It is necessary that the trajectory along which the laser irradiation device 10 actually moves the planned irradiation position E is moved in beam of the feeding speed of the wire 100 so that the planned irradiation position vertically traverses the wire 100. Therefore, as illustrated in the lower part of FIG. 6, the planned irradiation position E is moved in a direction obtained by synthesizing a direction along the width direction of the wire 100 and the feeding direction of the wire 100.

### [Second Irradiation Step]

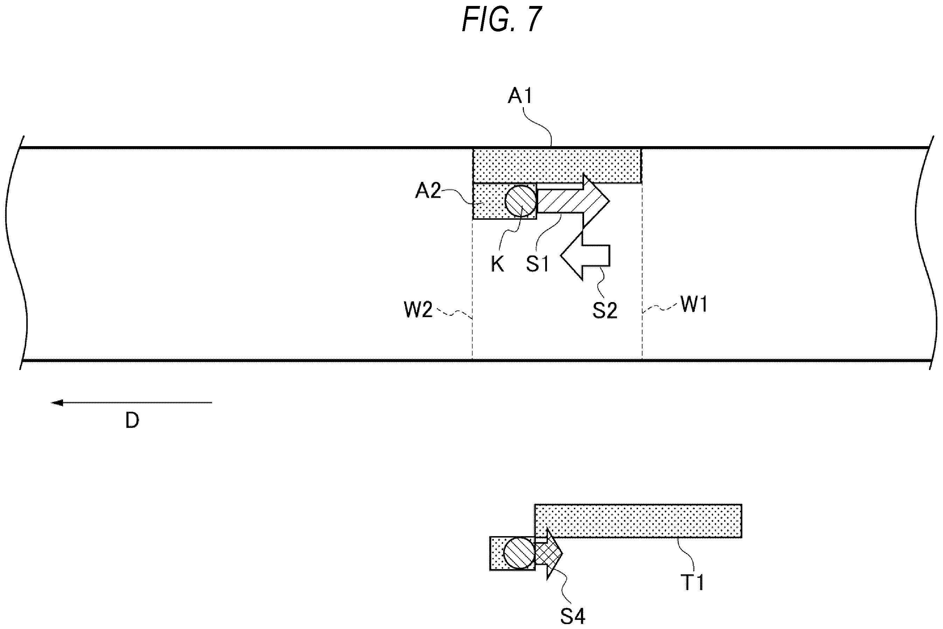

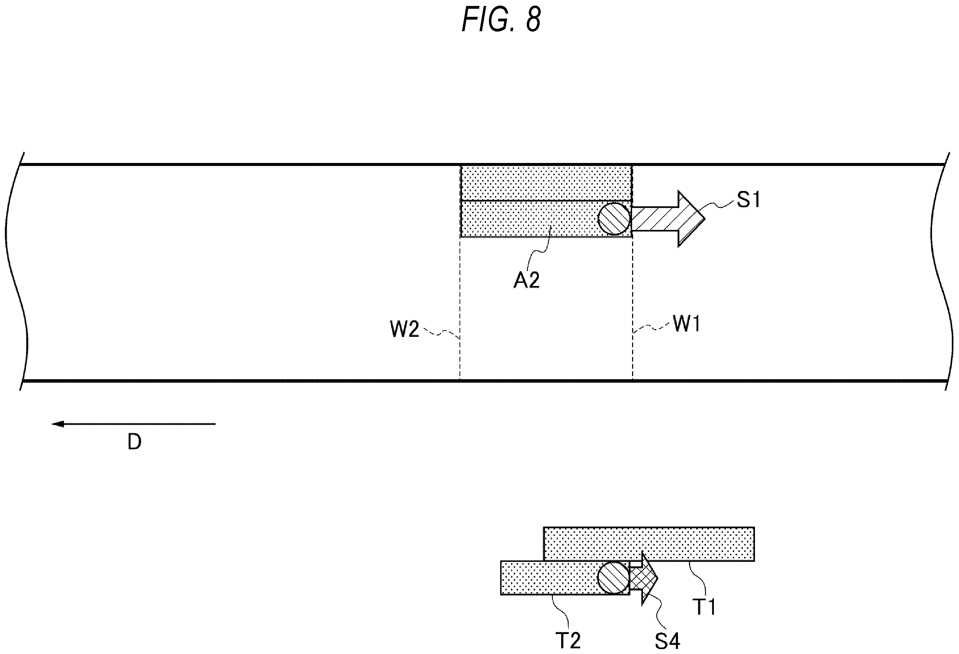

Next, the second irradiation step will be described with reference to FIGS. 7 and 8. FIG. 7 illustrates a state of the wire 100 (upper part) and a trajectory of the spot region K (lower part) immediately after the second irradiation step is started. In the second irradiation step, the laser irradiation device 10 irradiates a second irradiation region A2 of the wire 100 with the laser beam L while moving the spot region K in a direction opposite to the feeding direction D of the wire 100. The second irradiation region A2 is a region adjacent to the first irradiation region A1 in the width direction, and has the same width dimension as the first irradiation region A1.

The movement speed of the spot region K on the wire 100 in the second irradiation step is S1, which is the same as that in the first irradiation step. The laser irradiation device 10 adjusts the relative speed of the spot region K with respect to the wire 100 to S1 by moving, with respect to the wire 100 fed at the speed S2, the spot region K at a second scanning speed S4 in the direction opposite to the feeding direction D of the wire 100. When the feeding direction of the wire 100 is positive, the speeds S1, S2, and S4 satisfy a relational expression of S1 = S2 + S4.

FIG. 8 illustrates a state on the wire 100 (upper part) and a trajectory of the spot region K (lower part) at a time point when the second irradiation step is ended. As illustrated in the upper part, the laser irradiation device 10 ends the removing of the coating of the second irradiation region A2 at a time point when the second irradiation step is ended. As illustrated in the lower part, a trajectory T2 along which the laser irradiation device 10 actually moves the spot region K is shorter than the second irradiation region A2. This is because the second scanning speed S4 at which the spot region K is actually moved is less than the speed S1 at which the spot region K moves on the wire 100 (S4 < S1).

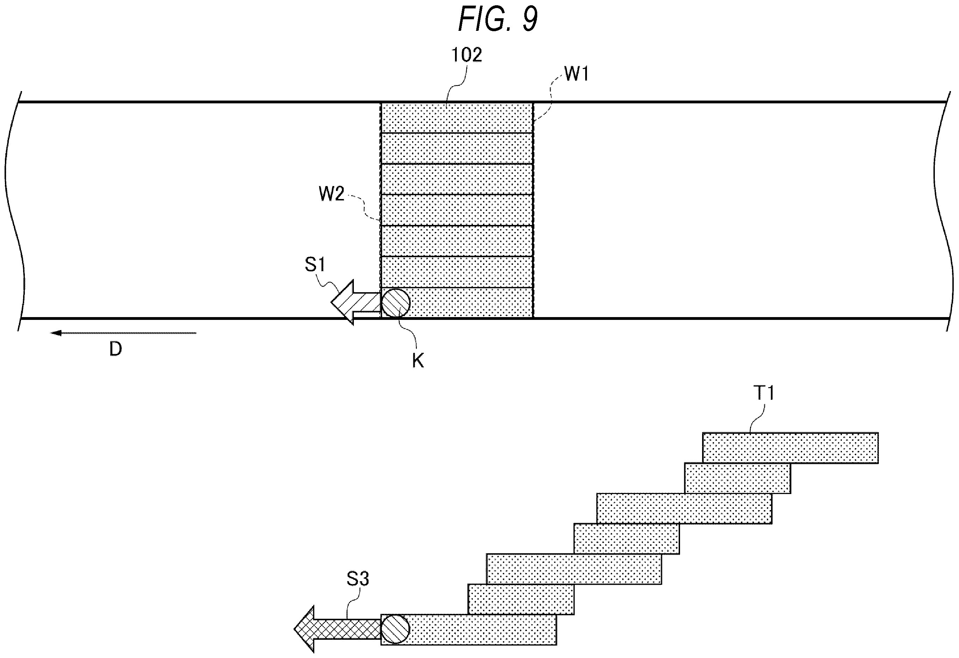

FIG. 9 illustrates a state where irradiation, with the laser beam L, of the entire region divided by the start line W1 and the end line W2 is ended. As illustrated in FIG. 9, on the wire 100, the removed region 102 has an elongated rectangular shape along the width direction of the wire 100, whereas the trajectory T1 of the spot region K moved by the laser irradiation device 10 until the irradiation, with the laser beam L, of the entire region divided by the start line W1 and the end line W2 is ended has a stepped shape.

With the coating removing method according to the present disclosure, the coating of the wire 100 is removed by the laser beam L while moving the wire 100 relative to the laser irradiation device 10 in the feeding direction D, and the spot region K of the laser beam L is moved along the feeding direction D. With this configuration, since the irradiation speed of the laser beam L does not change between a center and an end portion in the width direction of the wire 100, the coating can be removed evenly at all locations on the wire 100. Accordingly, it is possible to provide a coating removing method and a coating removing device capable of uniformly removing the coating of the wire between the end portion in the width direction and the central portion in the width direction of the wire.

In the coating removing method according to the present disclosure, the second scanning speed S4 of the laser beam L in the second irradiation step may be less than the first scanning speed S3 of the laser beam L in the first irradiation step, and a difference between the first scanning speed S3 and the second scanning speed S4 may be determined based on the feeding speed S2 of the wire 100. With this configuration, since the first scanning speed S3 and the second scanning speed S4 are determined with reference to the feeding speed S2 of the wire 100, it is easy to control the laser irradiation device 10.

With the coating removing method according to the present disclosure, the relative speed of the first scanning speed S3 to the feeding speed S2 may be the same as the relative speed of the second scanning speed S4 to the feeding speed S2. With this configuration, it is possible to suppress occurrence of unevenness in a removing degree of the coating in the entire region irradiated with the laser beam.

With the coating removing method according to the present disclosure, the time during which the laser beam L is emitted in the first irradiation step may be the same as the time during which the laser beam is emitted in the second irradiation step. With this configuration, an irradiation area of the laser beam in the first irradiation step can be made equal to an irradiation area of the laser beam in the second irradiation step. Accordingly, an efficient coating removing method can be provided.

Although the coating removing method according to the present embodiment has been described above, the coating removing method according to the present disclosure is not limited thereto. For example, a region irradiated with the laser beam L once may be irradiated with the laser beam L again. That is, the coating removing method according to the present disclosure may be a configuration having a first phase in which from the first irradiation step to the second irradiation step is repeated while moving the spot region K from one end to the other end in the width direction of the wire 100, and a second phase in which from the first irradiation step to the second irradiation step is repeated while moving the spot region K, with a movement direction of the width feeding step being reversed, from the other end to one end in the width direction of the wire 100.

In the following description, the "second phase" in which the region irradiated with the laser beam L in the removing step (first phase) described by FIGS. 4 to 9 is irradiated with the laser beam L again will be described.

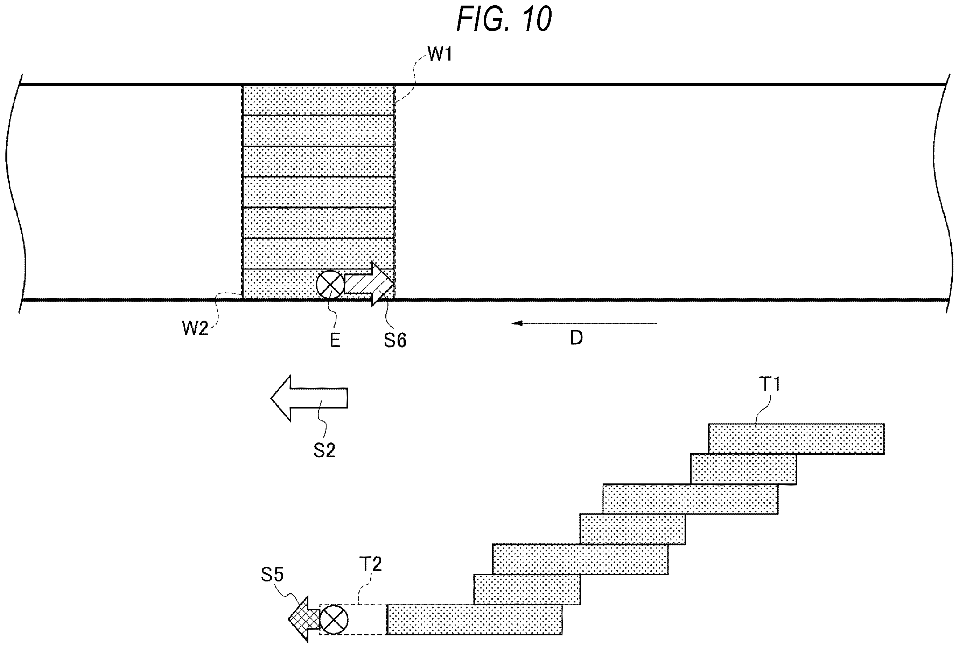

FIG. 10 is a diagram illustrating a coating removing step after end of the first phase and before start of the second phase. After the end of the first phase, the laser irradiation device 10 stops irradiation with the laser beam L and moves the planned irradiation position E to a start position of the second phase. In the example illustrated in FIG. 10, the laser irradiation device 10 moves the planned irradiation position E along the feeding direction D of the wire 100 at a movement speed S5 (see lower part of FIG. 10). Accordingly, the planned irradiation position E on the wire 100 moves at a relative movement speed S6 in the direction opposite to the feeding direction D (see upper part of FIG. 10). When the feeding direction of the wire 100 is positive, the speeds S2, S5, and S6 satisfy a relational expression of S6 = S2 - S5.

As illustrated in the lower part of FIG. 10, the trajectory T2 drawn by the planned irradiation position E is extended from the trajectory T1 drawn in the first phase. In this example, the second phase starts from a state where the planned irradiation position E is located at the start line W1.

When the coating of the wire 100 is removed by irradiating the wire 100 with the laser beam L a plurality of times, in a case where an interval between the first irradiation and the second irradiation is extremely short, the surface of the wire 100 may have a high temperature. Therefore, when the region irradiated in the first phase is irradiated with the laser beam again in the second phase, it is desirable to provide a constant cool time between the first phase and the second phase.

In the present embodiment, the time during which the planned irradiation position E is moved after the end of the first phase and before the start of the second phase is defined as the cool time. Accordingly, burning of the surface of the wire 100 can be suppressed. From the viewpoint of a cooling rate of the wire 100, it is desirable that the cool time is at least 1 ms or longer. For example, in the example illustrated in FIG. 10, it is desirable that the relative movement speed S6 of the planned irradiation position E is set such that the time taken for the planned irradiation position E to end movement from the end line W2 to the start line W1 is 1 ms or longer.

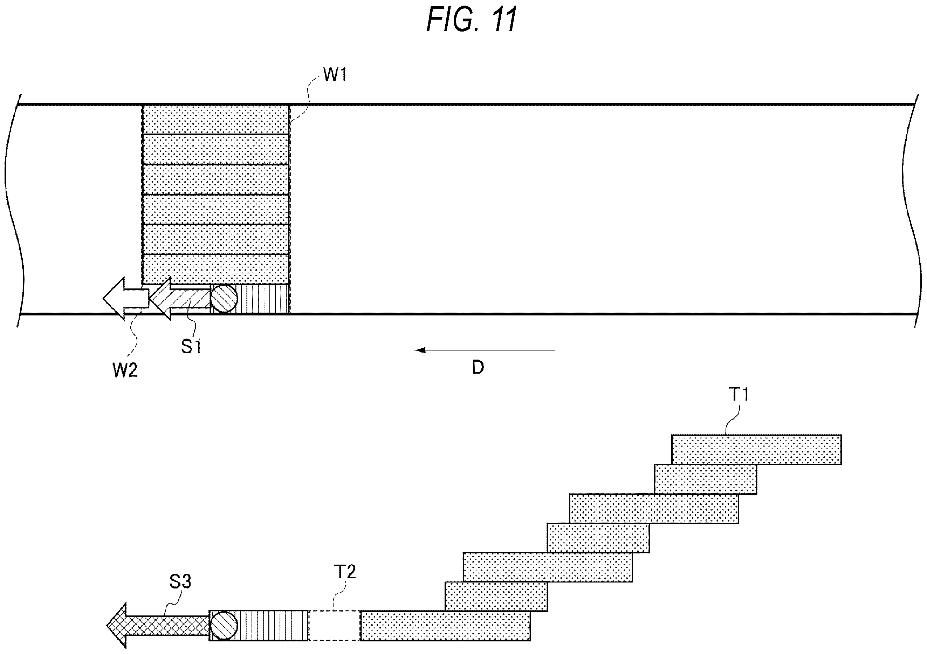

Next, an irradiation form of the laser beam L in the second phase will be described with reference to FIG. 11. In the second phase, the irradiation speed S1 of the laser beam L is the same as the irradiation speed in the first phase. In the second phase, the laser irradiation device 10 scans the spot region K at the first scanning speed S3, thereby maintaining the movement speed of the spot region K with respect to the wire 100 fed at the feeding speed S2 at S1.

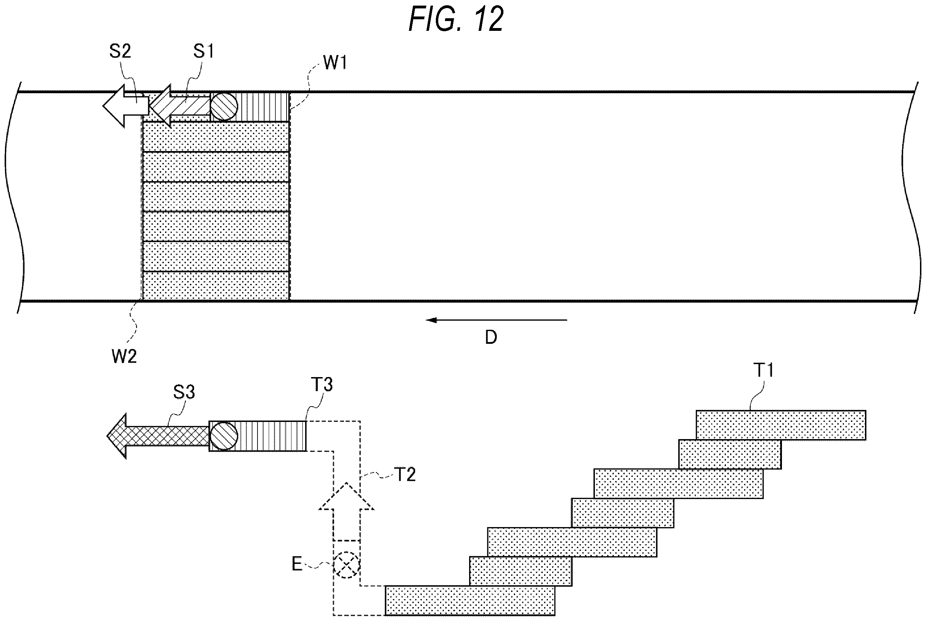

FIG. 10 illustrates an example in which the planned irradiation position E of the laser irradiation device 10 moves along the feeding direction D from the end of the first phase to the start of the second phase, but the present disclosure is not limited thereto. For example, as illustrated in FIG. 12, after the end of the first phase, the laser irradiation device 10 may start the irradiation with the laser beam L in the second phase after moving the planned irradiation position E in a direction traversing the feeding direction of the wire 100. In the example illustrated in FIG. 12, after the end of the first phase, the laser irradiation device 10 moves the planned irradiation position E in the width direction of the wire 100, and starts irradiation with the laser beam L in the second phase.

According to the above-described configuration, it is possible to irradiate the wire 100 with the laser beam L a plurality of times without moving the laser irradiation device 10. In addition, it is unnecessary to provide a plurality of laser irradiation devices for emitting the laser beam L a plurality of times. Therefore, the efficiency of coating removing can be increased, and the cost can be reduced as compared with the related art.

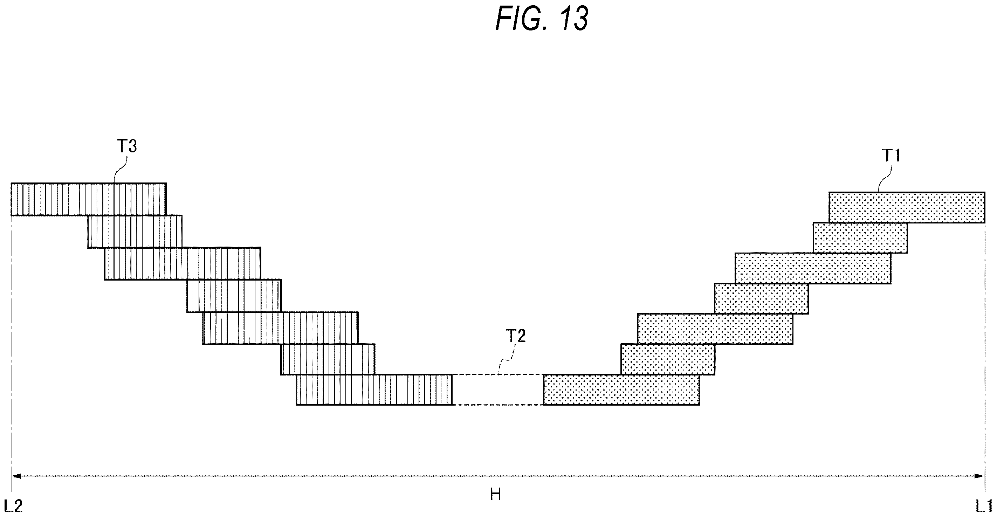

FIG. 13 is a diagram illustrating an irradiation trajectory of the laser beam L from the start of the first phase to the end of the second phase. Since the irradiation with the laser beam L according to the present embodiment is performed while feeding the wire 100, a movement range of the spot region K tends to be widened in the feeding direction of the wire 100. In the above-described embodiment, it is desirable that the movement trajectory of the spot region K of the laser beam L from the first phase to the second phase when viewed from the laser irradiation device 10 falls within the irradiation range of the laser irradiation device 10. In the example illustrated in FIG. 13, a distance H from a place L1 where the irradiation with the laser beam L is started to a place L2 where the irradiation with the laser beam is ended falls within the irradiation range of the laser irradiation device 10.

The irradiation range of the laser beam L can also be obtained from the irradiation time of the laser beam L and the feeding speed of the wire 100. In the coating removing method according to the present disclosure, it is preferable that a total feeding length calculated by multiplying a feeding speed by a time obtained by adding a time taken for the first phase, a time taken for the second phase, and the cool time is set to be less than a maximum irradiation range of the laser irradiation device 10. In the example illustrated in FIG. 13, a total feeding length H obtained by multiplying the feeding speed S2 of the wire 100 by the time required for the movement of the trajectory T1, the time required for the movement of the trajectory T2, and the time required for the movement of the trajectory T3 is less than the maximum irradiation range of the laser irradiation device 10.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A coating removing method for removing a coating of a wire by laser beam while moving the wire in a feeding direction relative to a laser irradiation device,
wherein a spot region of the laser beam is moved along the feeding direction.

2. The coating removing method according to claim 1, comprising:
a first irradiation step of irradiating a first irradiation region on the wire with the laser beam along the feeding direction;
a width feeding step of moving the spot region in a width direction intersecting the feeding direction, after the first irradiation step; and
a second irradiation step of irradiating a second irradiation region adjacent to the first irradiation region in the width direction with the laser beam along a return direction opposite to the feeding direction, after the width feeding step.

3. The coating removing method according to claim 2,
wherein a second scanning speed of the laser beam in the second irradiation step is less than a first scanning speed of the laser beam in the first irradiation step, and
a difference between the first scanning speed and the second scanning speed is determined based on a feeding speed of the wire.

4. The coating removing method according to claim 3,
wherein a relative speed of the first scanning speed to the feeding speed is the same as a relative speed of the second scanning speed to the feeding speed.

5. The coating removing method according to claim 4,
wherein a time during which the laser beam is emitted in the first irradiation step is the same as a time during which the laser beam is emitted in the second irradiation step.

6. The coating removing method according to claim 2, comprising:
a first phase of repeating from the first irradiation step to the second irradiation step while moving the spot region from one end to an other end in the width direction of the wire; and
a second phase of repeating from the first irradiation step to the second irradiation step while moving the spot region from the other end to the one end in the width direction of the wire, with a movement direction of the width feeding step being reversed.

7. The coating removing method according to claim 2, comprising:
a first phase of repeating from the first irradiation step to the second irradiation step while moving the spot region from one end to an other end in the width direction of the wire; and
a second phase of repeating from the first irradiation step to the second irradiation step while moving the spot region from the one end to the other end in the width direction of the wire, after end of the first phase and then moving the spot region to the one end in the width direction of the wire.

8. The coating removing method according to claim 6 or 7,
wherein a cool time of at least 1 ms or longer is provided between the first phase and the second phase.

9. The coating removing method according to claim 8,
wherein a movement trajectory of the spot region of the laser beam from the first phase to the second phase when viewed from the laser irradiation device falls within an irradiation range of the laser irradiation device.

10. The coating removing method according to claim 9,
wherein a total feeding length is set to be less than a maximum irradiation range of the laser irradiation device, the total feeding length being calculated by multiplying the feeding speed by a time obtained by adding a time taken for the first phase, a time taken for the second phase, and the cool time.

11. A coating removing device for removing a coating of a wire by laser beam while moving the wire in a feeding direction with respect to a laser irradiation device,
wherein the laser irradiation device includes:
a laser beam source unit configured to output the laser beam;
a scanning unit configured to scan a spot region of the laser beam with respect to the wire; and
a controller configured to control the scanning unit, and
the controller is configured to control the scanning unit to move the spot region along the feeding direction of the wire.
